# EUROPEAN PATENT SPECIFICATION

(11) **EP 1 016 082 B1**
(45) Date of publication and mention of the grant of the patent: **02.05.2002**
(21) Application number: 98941845.4
(22) Date of filing: 11.09.1998
(51) Int. Cl.: G11B 19/20, G11B 7/09, G11B 7/095, G11B 7/14

(54) **DISC REPRODUCTION APPARATUS**
PLATTENWIEDERGABEGERÄT
APPAREIL DE REPRODUCTION DE DISQUE

(30) Priority: 19.09.1997 JP 27354397
(43) Date of publication of application: 05.07.2000
(73) Proprietor: KABUSHIKI KAISHA KENWOOD, Shibuya-ku, Tokyo 150-0043 (JP)
(72) Inventor: ANZAI, Tadashi, Tokyo 191-0065 (JP)
(74) Representative: Patentanwälte Leinweber & Zimmermann
(86) International application number: JP9804115
(87) International publication number: WO9916069

(56) References cited:
- EP-A- 0 505 156
- WO-A-97/15922
- JP-A- 9 223 353
- PATENT ABSTRACTS OF JAPAN vol. 009, no. 037 (P-335), 16 February 1985 -& JP 59 177776 A (MATSUSHITA DENKI SANGYO KK), 8 October 1984
- "ALIGNMENT FOR ACHIEVING A FLOOR-MOUNTED MULTIPLE BEAM OPTICAL HEAD" RESEARCH DISCLOSURE, no. 329, 1 September 1991, page 687 XP000226252

## Description

### BACKGROUND OF THE INVENTION

### 1. Field of the Invention

The present invention relates to a disc reproduction apparatus such as a compact disc reproduction apparatus, and more particularly to an apparatus for adjusting an inclination angle of the optical axis of an objective lens for an optical pickup and aligning the motion locus of the optical axis of the objective lens with the center of an optical disc.

### 2. Description of the Related Art

In a disc reproduction apparatus of a known type, a laser beam is focussed on a record track of an optical disc by an objective lens, and light reflected from the optical disc is focussed by the objective lens on a photodetector to reproduce information recorded on the optical disc. With such a disc reproduction apparatus, the optical axis of the objective lens is required to be perpendicular to the record surface of an optical disc in order to guide light reflected from the optical disc to a correct position of the photodetector.

Furthermore, the motion locus of the optical axis of an objective lens is required to be aligned with the center of an optical disc, if a disc reproduction apparatus performs tracking control by a three-beam method or if it is of a multi-beam type that signals are read at the same time from a plurality of light spots on record tracks.

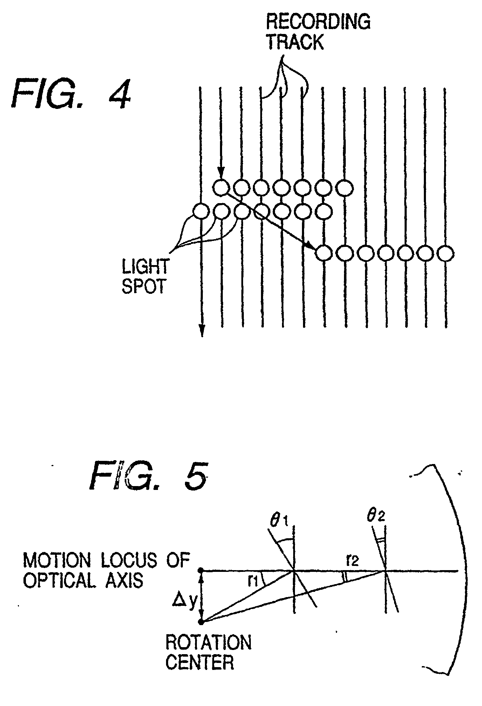

Fig. 4 shows a motion state of a plurality of light spots from which signals are read. A light beam is diffracted and focussed on an optical disc: as seven light spots. After these spots disposed in parallel read recording in one turn of each record track, they are jumped to the tracks starting from the fifth track. Signals read from the parallel light spots are stored and coupled together later. In order to prevent a read loss when the spots are jumped, signals are again read starting from the track which is two tracks before the next track.

A pitch between light spots in a disc radial direction is made equal to a pitch between record tracks, and tracking control is performed by using the central main spot. However, if the motion locus of the optical axis of an objective lens is misaligned with the center of an optical disc, sub-spots other than the main spot are displaced from the track centers.

Fig. 5 illustrates a displacement relation between to the motion locus of the optical axis and the rotation center of an optical disc. By representing a displacement of the rotation center of the optical disc from the motion locus of the optical axis by Δy, an inclination θ₁ along the tangential direction at a radius r₁ and an inclination θ₂ along the tangential direction at a radius r₂ are given by θ₁ = Δy/r₁ and θ₂ = Δy/r₂. A difference Δθ is given by Δθ = θ₁ - θ₂ = Δy(1/r₁ - 1/r₂).

Although a plurality of light spots focussed by a single objective lens are moved in parallel to the transport direction of an optical pickup, the inclinations of the spots along the optical disc tangential direction at the radii r₁ and r₂ have the difference Δθ. Therefore, the pitch between spots and the pitch between record tracks become different depending upon the position on an optical disc, so that all the spots are not aligned with record tracks. This position misalignment is called a displacement by R dependence.

It is therefore necessary to adjust the inclination angle of the optical axis of an objective lens for an optical pickup and to align the motion locus of the optical axis of the objective lens with the center of an optical disc. Such adjustment mechanisms have been proposed to date. With an optical pickup apparatus proposed in Japanese Laid-Open Utility Model Application No. 61-153122 gazette, a pickup unit is fixed to a mount plate, and the relative position and inclination angle of the mount plate relative to a movable base are adjusted by using three screws and threaded into the mount plate. With this optical pickup apparatus, the relative position and inclination angle of the mount plate relative to the movable base are changed finely with each screw so that the screw adjustment is required to be performed a plurality of times. As will be later described, if adjustment is performed by monitoring outputs from the optical pickup while an optical disc is rotated, the optical axis can be efficiently adjusted. However, with this optical pickup apparatus, such adjustment is impossible.

In an optical axis adjustment mechanism for an optical pickup proposed in Japanese Laid-Open Patent Application No. 6-168455 gazette, a pickup holder is mounted on a base which performs a linear reciprocal motion, and a pickup is mounted on this pickup holder. The pickup holder is rotatably supported by a pivot shaft which is parallel to the motion direction of the base, and a rotation angle about the pivot shaft is adjusted by a first screw threaded into the base to thereby adjust the inclination angle of the optical axis along the tangential direction.

The pickup is supported by the pickup holder rotatably about pivot shafts and about a second screw. The rotation angle about the second screw is adjusted by a third screw to thereby adjust the position of the optical axis relative to the motion locus of an objective lens. The second screw threaded into the pickup holder adjusts the rotation angle about the pivot shafts to thereby adjust the inclination angle of the optical axis along the radial direction.

With this optical axis adjustment mechanism for an optical pickup, the inclination angles of the optical axis along the tangential and radial directions and the position of the optical axis relative to the motion locus of an objective lens can be adjusted generally independently from each other. However, this mechanism is also associated with the problem that adjustment cannot be performed by monitoring outputs from the optical pickup while an optical disc is rotated.

Further, EP-A-0 806 767 reflecting the preamble of claim 1 and JP-A-09223353 disclose a movable supporting member of the disc motor and turntable for the purpose of adjusting the skew angle.

### SUMMARY OF THE INVENTION

The present invention has been made in consideration of the above circumstances. It is an object of the present invention to provide a disc reproduction apparatus capable of adjusting the optical axis of an objective lens while an optical disc is rotated, wherein the position adjustment of the optical axis relative to a motion locus of the objective lens does not affect the inclination angle of the optical axis.

An embodiment of the present invention is defined in independent claim 1.

A preferred embodiment of the invention is defined in dependent claim 6.

In the disc reproduction apparatuses described above, a rotation center of the bracket is aligned on a line extending from a motion locus of the optical axis of the objective lens.

### BRIEF DESCRIPTION OF THE DRAWINGS

Fig. 1 is a plan view of a disc reproduction apparatus according to an embodiment of the invention.

Fig. 2 is a front view of the disc reproduction apparatus shown in Fig. 1.

Fig. 3 is a broken perspective view showing the main components of the disc reproduction apparatus shown in Fig. 1.

Fig. 4 is a diagram illustrating tracking control by a plurality of light spots.

Fig. 5 is a diagram illustrating displacement of motion locus of an optical axis of the disc reproduction apparatus upon a center displacement of an optical disc and upon different radial positions on the disc.

### DETAILED DESCRIPTION OF THE PREFERRED EMBODIMENTS

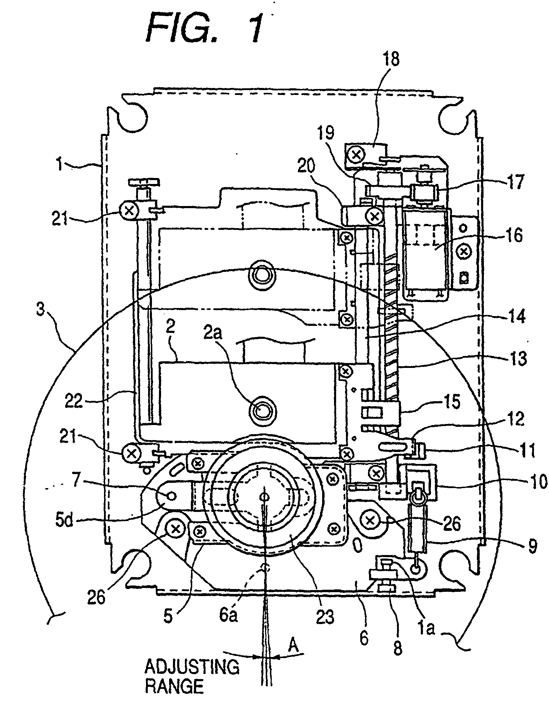

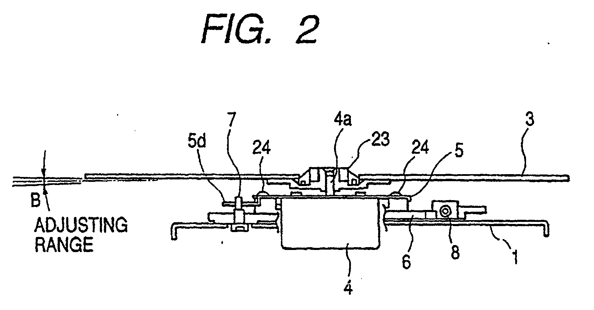

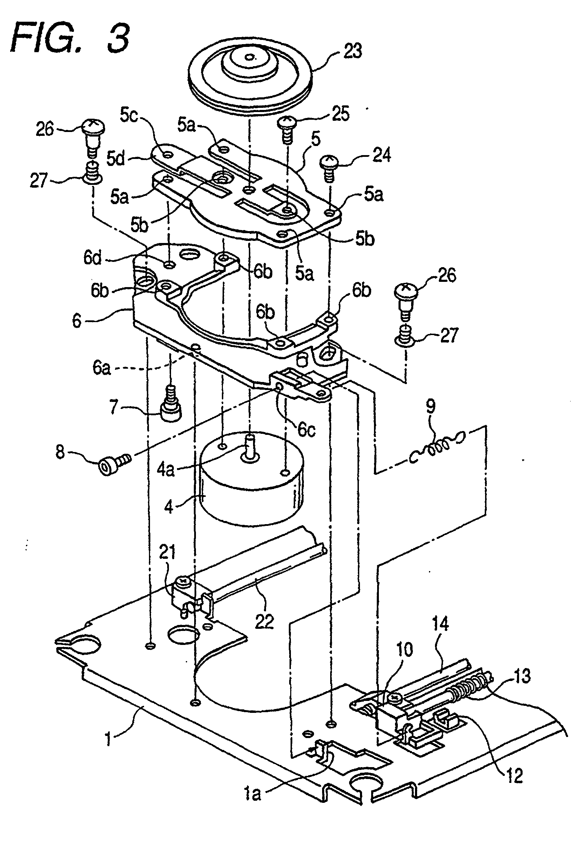

A multi-beam type disc reproduction apparatus according to an embodiment of the invention will be described with reference to the accompanying drawings. Fig. 1 is a plan view of a disc reproduction apparatus according to an embodiment of the invention, Fig. 2 is a front view of the disc reproduction apparatus, and Fig. 3 is a broken perspective view showing the main components of the disc reproduction apparatus. Reference numeral 1 represents a reproduction unit chassis which is supported by an unrepresented main chassis via an elastic member. The reproduction unit chassis 1 is moved up and down by an unrepresented drive mechanism.

Main shaft holders 10 and 20 are fastened to the reproduction unit chassis 1, fix a main shaft 14 and rotatably support a lead screw 13. Sub-shaft holders 21 and 21 fastened to the reproduction unit chassis 1 fix a sub shaft 22. The main shaft 14 and sub-shaft 22 are inserted into an optical pickup 2 having an objective lens 2a, so that the latter is supported by the reproduction unit chassis 1 to be linearly movable. A plate spring 12 and a resin rack 15 are fastened to the optical pickup 2 by common screws. The plate spring 12 energizes the rack 15 to be made in mesh with the lead screw 13.

A plate spring 18 fastened to the reproduction unit chassis 1 energizes the lead screw 13 to remove a play of the lead screw 13 in its axial direction. A pinion 17 fixed to the rotary shaft of an optical pickup drive motor 16 meshes with a gear 19 fixed to the lead screw 13. As the optical pickup drive motor 16 rotates, the optical pickup 2 is transported in an up/down direction as viewed in Fig. 1.

More specifically, the optical pickup 2 is transported between a home position indicated by a solid line and a position indicated by a two-dot chain line. The home position is detected with a photo-interrupter 11 fixed to the reproduction unit chassis 1 when a bent portion of the plate spring 12 enters a region of the photo-interrupter 11.

A disc motor 4 is supported by the reproduction unit chassis 1 via a bracket 6 and a motor mount plate 5, as will be later detailed with reference to Fig. 3. A shaft 6a projecting from the lower surface of the bracket 6 is fitted in a hole of the reproduction unit chassis 1. Screws 26 and 26 inserted into elongated holes of the bracket 6 and threaded into the reproduction unit chassis 1 make the flat lower surface of the bracket 6 abut on the upper surface of the reproduction unit chassis 1 with the help of compression coil springs 27 and 27. Therefore, the bracket 6 can be pivoted about the shaft 6a without any back rush in the up/down direction.

An extension coil spring 9 extended between the bracket 6 and a main holder 10 energizes the bracket 6 in the counter-clockwise direction as viewed downward in Fig. 1. A front end of an adjusting screw 8 threaded into a screw hole 6c of the bracket 6 abuts on a bent portion 1a of the reproduction unit chassis 1. By adjusting the adjusting screw 8, a rotary position of the bracket 6 about the shaft 6a can be set.

Four bosses formed on the bracket 6 are formed with screw holes 6b, 6b, 6b, and 6b. The motor mount plate 5 made of a plate spring is formed with holes 5a, 5a, 5a, and 5a at positions corresponding to the screw holes. Screws 24, 24,... (only one screw is shown in Fig. 3) are threaded via the holes 5a, 5a,... into the screw holes 6b, 6b,... so that the motor mount plate 5 is fastened to the bracket 6. The left bosses of the bracket 6 are slightly higher than the right bosses so that the left side of the motor mount plate 5 is slanted higher in a natural state.

A center stripe member 5d of the motor mount plate 5 couples with the peripheral member thereof via two bridges. The disc motor 4 is fastened to the motor plate 5 by screws 25 and 25 (only one screw is shown in Fig. 3) inserted into holes 5b and 5b. The rotary shaft 4a of the disc motor 4 extends upward through a hole of the motor mount plate 5 and a turntable 23 is made in pressure contact with the rotary shaft.

An adjusting screw 7 inserted into a hole 6d of the bracket 8 is threaded into a screw hole 5c of the motor mount plate 5. By adjusting the adjusting screw 7, the stripe member 5d of the motor mount plate 5 is displaced so that the inclination of the rotary shaft of the disc motor 4 can be adjusted.

An unrepresented clamper chassis is fastened to the main chassis, and an unrepresented clamper is placed on the clamper chassis. An unrepresented disc tray is mounted on the main chassis to be movable thereon. The disc tray transports a compact disc 3 between the outside of the apparatus and the upper position of the turntable 23.

As the reproduction unit chassis 1 is rotated upward after the compact disc 3 is transported to the upper position of the turntable 23, the turntable 23 lifts the compact disc 3 from the disc tray and attracts the clamper by a magnetic force to thereby clamp the compact disc 1 between the turntable 23 and clamper. In this state, the compact disc 3 is rotated by the disc motor and the optical pickup 2 is transported in a radial direction to read signals from the compact disc 3.

This disc reproduction apparatus is a multi-beam type reproduction apparatus described with reference to Fig. 4, so that signals can be read in a short time from the compact disc 3. Seven diffracted beams from the laser diode are focussed on the record surface of the compact disc 3 as seven light spots.

Tracking and focussing controls are performed by a tracking control signal and a focussing control signal generated from a tracking error signal and a focussing error signal obtained from light reflected from the central main spot and supplied to a drive coil for the objective lens 2a. In this case, it is necessary to perform an optical axis position adjustment for aligning the motion locus of the optical axis of the objective lens 2a with the rotation center of the compact disc 3, in order to align the seven spots with the record tracks in the whole record area of the compact disc 3.

It is also necessary to adjust the inclination angle to make the optical axis of the objective lens 2a perpendicular to the record surface of the compact disc 3 to thereby guide the light reflected from the compact disc 3 to the correct position of the photodetector.

As described earlier, for the optical axis position adjustment, the bracket 6 is rotated about the shaft 6a by adjusting the adjusting screw 8. The bracket 6 is rotated in an angle adjusting range of A shown in Fig. 1. In this case, since the shaft 6a is positioned on a line extending from the motion locus of the optical axis of the objective lens 2a, the center of the compact disc 3 moves by a small distance in a direction perpendicular to the motion locus of the optical axis. Since the abut area between the bracket 6 and reproduction unit chassis 1 is broad, the optical axis position adjustment will not make the bracket 6 be slanted relative to the reproduction unit chassis 1, and will not change the inclination angle of the optical axis of the objective lens 2a relative to the compact disc 3 and turntable 23.

As described earlier, the inclination angle of the optical axis along the tangential direction is adjusted by displacing the motor mount plate 5 by adjusting the adjusting screw 7. The motor mount plate 5 is displaced by an angle adjusting range of B shown in Fig. 2. In this case, since the motor mount plate 5 is elastically deformed in one direction from its natural state, any back rush will not occur during the adjustment so that the adjustment can be performed precisely. For the adjustment of the inclination angle of the optical axis along the radial direction, an unrepresented adjusting screw is used which is operated from the lower side of the reproduction unit 1 on the optical pickup 2 side.

After the adjustments of the optical axis along the radial and tangential directions are performed as required, the optical axis position adjustment is performed. This adjustment can be performed by monitoring signals from the optical pickup while the compact disc 3 is rotated.

A displacement of the optical axis position can be detected, for example, in the following manner. A pitch between light spots on the optical pickup is equal to a pitch between record tracks. Therefore, if the spots are traversed across the record tracks without tracking control, signals from two adjacent spots have a phase difference of 360°, and its Lissajous's figure is a straight line having an angle of 45° relative to the horizontal axis. However, if the optical axis position is displaced, the Lissajous's figure becomes ellipsoidal, In this manner, the optical axis position displacement can be known.

The inclination angles of the optical axis along the radial and tangential directions can be adjusted, for example, by detecting a maximum output signal of the photodetector of the optical pickup.

The embodiment is structured as described above. The invention is not limited only to this embodiment. For example, two adjusting screws may be used for displacing the motor mount plate 5 so as to adjust the inclination angle along the radial and tangential directions.

The inclination angle along the radial direction may be adjusted on the optical pickup side by adjusting the angle of the optical axis of the objective lens relative to the direction of the main shaft inserted into the optical pickup.

In a multi-beam type disc reproduction apparatus, it is very important to align the motion locus of the optical axis of an objective lens with the rotation center of an optical disc so as to align each light spot with a record track and so as not to generate a signal read error. In the disc reproduction apparatus of this invention, the disc motor is supported by the reproduction unit chassis via the bracket and the bracket is rotated to perform the adjustment very easily and precisely.

The inclination angle and position of the optical axis of the objective lens can also be performed easily because output signals from the optical pickup are monitored while an optical disc is rotated.

Furthermore, since the position adjustment of the optical axis does not influence the inclination angle of the optical axis, the adjustment is not required to be repeated a number of times.

## Claims

1. A disc reproduction apparatus comprising a disc motor (4) for rotating a turntable (23) and an optical pickup (2) for performing recording or reproduction to a disc (3) on said turntable, said optical pickup being supported movably in a radial direction of said disc to a reproduction unit , chassis (1),
wherein said disc motor is supported via a supporting member (6) to said reproduction unit chassis, said turntable being fixed to a rotary shaft (4a) of the disc motor,
**characterized in that**
said supporting member is rotatively supported to a shaft (6a) in a direction perpendicular to a motion locus of an optical axis of an objective lens of said optical pickup on a plane parallel to a plane of said turntable (23) on which the disc is mounted, and comprises means (8) for rotatively positioning said supporting member around said shaft.

2. A disc reproduction apparatus according to claim 1, wherein said supporting member (6) is rotated by said positioning means (8) so that a rotation center of said turntable (23) is aligned with a line extending from a motion locus of an optical axis of an objective lens of said optical pickup (2).

3. A disc reproduction apparatus according to claim 1, wherein said positioning means (8) comprises a screw provided to said supporting member (6), an end of the screw abuting on a projection (1a) of said reproduction unit chassis (1) and said supporting member (6) being rotated according to a thrust amount of said screw.

4. A disc reproduction apparatus according to claim 1, wherein said supporting member (6) is energized around said shaft (6a) by a coil spring (9).

5. A disc reproduction apparatus according to claim 1, wherein a rotation center of said supporting member (6) is on a line extending from a motion locus of an optical axis of said optical pickup.

6. A disc reproduction apparatus according to claim 1, wherein
said disc motor (4) is attached via an elastic member (5d) to said supporting member (6),
said elastic member (5d) has at its end a predetermined height relative to the supporting member, in a direction parallel to the optical axis,
said supporting member (6) has means (7) for displacing and positioning said elastic member (5d) in a direction of said height.

## Patentansprüche

1. Plattenwiedergabegerät, welches aufweist: einen Plattenantriebsmotor (4), welcher einen Plattenteller (23) antreibt, und einen optischen Aufnehmer (2), der ein Aufzeichnen auf oder ein Wiedergeben von einer auf dem Plattenteller befindlichen optischen Platte (3) durchführt, wobei der optische Aufnehmer an einer Wiedergabeeinheit-Grundplatte (1) in radialer Richtung der Platte beweglich gehaltert ist,
wobei der Plattenmotor über ein Trägerelement (6) an der Wiedergabeeinheit-Grundplatte (1) gehaltert ist und der Plattenteller mit der Antriebswelle (4a) des Plattenantriebsmotors fest verbunden ist,
**dadurch gekennzeichnet, dass**
das Trägerelement an einem Zapfen (6a) schwenkbar gehaltert ist, und zwar in einer Richtung senkrecht zur Bewegungsortskurve einer optischen Achse einer Objektivlinse des optischen Aufnehmers und in einer Ebene parallel zur Ebene des Plattentellers (23), auf welchem die Platte angebracht ist, und es eine Einrichtung (8) aufweist, welche die Schwenkposition des Trägerelements um diesen Zapfen einstellt.

2. Plattenwiedergabegerät nach Anspruch 1, bei welchem das Trägerelement (6) durch die Positionseinstelleinrichtung (8) so geschwenkt wird, dass der Drehmittelpunkt des Plattentellers (23) mit einer Linie fluchtet, die durch die Bewegungsortskurve der optischen Achse einer Objektivlinse des optischen Aufnehmers (2) verläuft.

3. Plattenwiedergabegerät nach Anspruch 1, bei welchem die Positionseinstelleinrichtung (8) eine am Trägerelement (6) vorgesehene Schraube aufweist,
wobei ein Ende der Schraube gegen einen Vorsprung (1a) der Wiedergabeeinheit-Grundplatte (1) ansteht und das Trägerelement (6) entsprechend der Größe der Axialverschiebung der Schraube geschwenkt wird.

4. Plattenwiedergabegerät nach Anspruch 1, bei welchem das Trägerelement (6) um den Zapfen (6a) mittels einer Schraubenfeder (9) vorgespannt ist.

5. Plattenwiedergabegerät nach Anspruch 1, bei welchem der Drehmittelpunkt des Trägerelementes (6) auf einer Linie liegt, die sich ausgehend von der Bewegungsortskurve einer optischen Achse des optischen Aufnehmers aus erstreckt.

6. Plattenwiedergabegerät nach Anspruch 1, bei welchem
der Plattenantriebsmotor (4) über ein elastisches Element (5d) am Trägerelement (6) befestigt ist,
das elastische Element (5d) an seinem Ende in einer Richtung parallel zur optischen Achse eine vorbestimmte Höhe relativ zum Trägerelement aufweist, und
das Trägerelement (6) eine Einrichtung (7) aufweist, welche das elastische Element (5d) in Richtung der Höhe verschiebt und positioniert.

## Revendications

1. Appareil de reproduction de disque comprenant un moteur de disque (4) pour faire tourner un plateau (23) et une tête de lecture optique (2) pour procéder à l'enregistrement ou à la reproduction d'un disque (3) sur ledit plateau, ladite tête de lecture optique étant supportée d'une manière mobile dans une direction radiale dudit disque à un châssis d'unité de reproduction (1), où ledit moteur de disque est supporté par un élément de support (6) audit châssis de l'unité de reproduction, ledit plateau étant fixé à un arbre rotatif (4a) du moteur de disque, **caractérisé en ce que** ledit élément de support est supporté d'une manière rotative sur un arbre (6a) dans une direction perpendiculaire à un lieu de mouvement d'un axe optique d'une lentille d'objectif de ladite tête de lecture optique sur un plan parallèle à un plan dudit plateau (23) sur lequel le disque est installé, et comprend un moyen (8) pour positionner d'une manière rotative ledit élément de support autour dudit arbre.

2. Appareil de reproduction de disque selon la. revendication 1, où ledit élément de support (6) est entraîné en rotation par ledit moyen de positionnement (8) de telle sorte qu'un centre de rotation dudit plateau (23) est aligné avec une ligne s'étendant à partir d'un lieu de mouvement d'un axe optique d'une lentille d'objectif de ladite tête de lecture optique (2).

3. Appareil de reproduction de disque selon la revendication 1, où ledit moyen de positionnement (8) comprend une vis prévue audit élément de support (6), une extrémité de la vis butant contre une saillie (1a) dudit châssis (1) de l'unité de reproduction, et ledit élément de support (6) étant entraîné en rotation en accord avec une quantité de poussée de ladite vis.

4. Appareil de reproduction de disque selon la revendication 1, où ledit élément de support (6) est excité autour dudit arbre (6a) par un ressort hélicoïdal (9).

5. Appareil de reproduction de disque selon la revendication 1, où un centre de rotation dudit élément de support (6) se situe sur une ligne s'étendant d'un lieu de mouvement d'un axe optique de ladite tête de lecture optique.

6. Appareil de reproduction de disque selon la revendication 1, où ledit moteur de disque (4) est fixé par un élément élastique (5d) audit élément de support (6), ledit élément élastique (5d) présente à son extrémité une hauteur prédéterminée relativement à l'élément de support, dans une direction parallèle à l'axe optique, ledit élément de support (6) comporte un moyen (7) pour déplacer et positionner ledit élément élastique (5d) dans une direction de ladite hauteur.
